(19) Europäisches Patentamt / European Patent Office / Office européen des brevets

(11) **EP 4 535 216 A1**

(12) **EUROPEAN PATENT APPLICATION**
published in accordance with Art. 153(4) EPC

(43) Date of publication:
**09.04.2025 Bulletin 2025/15**

(21) Application number: **23846687.4**

(22) Date of filing: **28.07.2023**

(51) International Patent Classification (IPC):
***G06F 30/20*** (2020.01)

(52) Cooperative Patent Classification (CPC):
**G06F 30/20**

(86) International application number:
**PCT/JP2023/027807**

(87) International publication number:
**WO 2024/024957 (01.02.2024 Gazette 2024/05)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **29.07.2022 JP 2022121561**

(71) Applicant: **Resonac Corporation**
**Tokyo 105-7325 (JP)**

(72) Inventor: **HANAOKA Kyohei**
**Tokyo 105-7325 (JP)**

(74) Representative: **Berggren Oy**
**P.O. Box 16**
**Eteläinen Rautatiekatu 10A**
**00101 Helsinki (FI)**

(54) **DESIGN ASSISTANCE DEVICE, DESIGN ASSISTANCE METHOD, AND DESIGN ASSISTANCE PROGRAM**

(57)    A design assistance device includes: a data acquisition unit that acquires a plurality of pieces of performance data each including a design parameter group and observation values of a plurality of characteristic items of a product or the like; a model construction unit that constructs, based on the performance data, a prediction model for predicting the observation values of the characteristic items based on the design parameter group; a target value acquisition unit that acquires target values for the observation values of the respective characteristic items; a score function construction unit that constructs a score function including at least a target achievement probability term indicating an overall achievement probability that is a probability that the target values of all the characteristic items are achieved, which is calculated using the design parameter group as a variable based on the prediction model; a target achievement probability acquisition unit that acquires the overall achievement probability by optimizing the score function; and an output unit that outputs the overall achievement probability.

*Fig.2*

## Description

## Technical Field

One aspect of the present disclosure relates to a design assistance device, a design assistance method, and a design assistance program.

## Background Art

Product design utilizing machine learning has been studied. As one field of the product design, for example, in the design of functional materials, for example, a model for estimating characteristics of a material is constructed by machine learning using experiments and learning data including a pair of a raw material compounding ratio and characteristic regarding a produced material, and characteristics are predicted with respect to an untested raw material compounding ratio. By making an experimental plan by predicting such characteristics, it is possible to efficiently optimize parameters such as the characteristics of the material and the raw material compounding ratio, and development efficiency is improved. As such an optimization method, Bayesian optimization is known to be effective, and a design device that outputs a design value using Bayesian optimization is known (see, for example, Patent Literature 1).

## Citation List

## Patent Literature

Patent Literature 1: Japanese Unexamined Patent Publication No. 2020-52737

## Summary of Invention

## Technical Problem

On the other hand, in product development of a material or the like, target values are set for observation values of characteristic items indicating characteristics of the product or the like. In the product development, it is important to set appropriate target values in order to efficiently advance the product development, determine continuation or discontinuation of development, and make decisions such as a change in development policy. However, when a product or the like has many characteristic items and the number of target values of the characteristic items to be set is large, it is not easy to set appropriate target values.

Therefore, the present invention has been made in view of the above problems, and an object thereof is to easily set a target value of a characteristic item constituting an objective variable in a production process of a product, a product in process, a semi-product, a component, or a prototype.

## Solution to Problem

A design assistance device according to a first aspect of the present disclosure is a design assistance device that assists setting of target values for observation values of a plurality of characteristic items indicating characteristics of a product, a product in process, a semi-product, a component, or a prototype produced based on a design parameter group including a plurality of design parameters. The design assistance device includes: a data acquisition unit that acquires a plurality of pieces of performance data each including the design parameter group and the respective observation values of the plurality of characteristic items for the produced product, in-process product, semi-product, component, or prototype; a model construction unit that constructs, based on the performance data, a prediction model for predicting the observation values of the characteristic items as a probability distribution, or an approximation or an alternate index thereof based on the design parameter group; a target value acquisition unit that acquires the target values for the observation values of the respective characteristic items; a score function construction unit that constructs a score function including at least a target achievement probability term indicating an overall achievement probability that is a probability that the target values of all the characteristic items are achieved, which is calculated using the design parameter group as a variable based on the prediction model; a target achievement probability acquisition unit that acquires the overall achievement probability by optimizing the score function; and an output unit that outputs the overall achievement probability.

A design assistance method according to the first aspect of the present disclosure is a design assistance method in a design assistance device that assists setting of target values for observation values of a plurality of characteristic items indicating characteristics of a product, a product in process, a semi-product, a component, or a prototype produced based on a design parameter group including a plurality of design parameters. The design assistance method includes: a data acquisition step of acquiring a plurality of pieces of performance data each including the design parameter group and the respective observation values of the plurality of characteristic items for the produced product, in-process product, semi-product, component, or prototype; a model construction step of constructing, based on the performance data, a prediction model for predicting the observation values of the characteristic items as a probability distribution, or an approximation or an alternate index thereof based on the design parameter group; a target value acquisition step of acquiring the target values for the observation values of the respective characteristic items; a score function construction step of constructing a score function including at least a target achievement probability term indicating an overall achievement probability that is a probability that the target values of all the characteristic items are achieved, which is calculated using the design parameter group as a variable based on the prediction model; a target achievement probability acquisition step of acquiring the overall achievement probability by optimizing the score function; and an output step of outputting the overall achievement probability.

A design assistance program according to the first aspect of the present disclosure is a design assistance program for causing a computer to function as a design assistance device that assists setting of target values for observation values of a plurality of characteristic items indicating characteristics of a product, a product in process, a semi-product, a component, or a prototype produced based on a design parameter group including a plurality of design parameters. The design assistance program causes the computer to implement: a data acquisition function of acquiring a plurality of pieces of performance data each including the design parameter group and the respective observation values of the plurality of characteristic items for the produced product, in-process product, semi-product, component, or prototype; a model construction function of constructing, based on the performance data, a prediction model for predicting the observation values of the characteristic items as a probability distribution, or an approximation or an alternate index thereof based on the design parameter group; a target value acquisition function of acquiring the target values for the observation values of the respective characteristic items; a score function construction function of constructing a score function including at least a target achievement probability term indicating an overall achievement probability that is a probability that the target values of all the characteristic items are achieved, which is calculated using the design parameter group as a variable based on the prediction model; a target achievement probability acquisition function of acquiring the overall achievement probability by optimizing the score function; and an output function of outputting the overall achievement probability.

According to such an aspect, the prediction model is constructed based on the performance data, the target value for each characteristic item is acquired, and the score function including the overall achievement probability term is constructed based on the acquired target value and the prediction model. Then, the overall achievement probability is acquired and output by optimizing the score function. Therefore, since it is possible to determine whether or not the target value is appropriate by referring to the output overall achievement probability, it is easy to set an appropriate target value.

According to a design assistance device according to a second aspect, in the design assistance device according to the first aspect, the target value acquisition unit may acquire the target value for at least one of the plurality of characteristic items based on an input from a user.

According to such an aspect, the user can easily set the target value of each characteristic item. Therefore, by repeatedly performing the input of the target value and the output of the overall achievement probability while changing the input target value, it is possible to easily set an appropriate target value.

According to a design assistance device according to a third aspect, in the design assistance device according to the first or second aspect, the target value acquisition unit may acquire the target value for at least one of the plurality of characteristic items from a predetermined database that stores the target values of the characteristic items in advance.

According to such an aspect, the overall achievement probability can be output using the target value of each characteristic item stored in advance. As a result, for example, in a case where the number of characteristic items is large and the acquisition of the target value is based on the input from the user, the labor related to the input becomes complicated, but the labor can be reduced. In addition, for example, in a case where a target value group having performance as an appropriate target value is stored in the database in advance, it is easy to set an appropriate target value by acquiring the target value group as initial target values and correcting a part of the target values. In addition, a performance value having performance as an observation value of each characteristic item is stored in the database in advance, and the performance value is used as an initial target value, thereby facilitating appropriate target setting.

According to a design assistance device according to a fourth aspect, in the design assistance device according to any one of the first to third aspects, the output unit may output the target values acquired by the target value acquisition unit together with the overall achievement probability.

According to such an aspect, since the target value of the characteristic item in the optimization of the score function and the overall achievement probability acquired by the optimization are output together in a mode such as display, a correspondence relation between the target value group and the overall achievement probability can be easily recognized.

According to a design assistance device according to a fifth aspect, in the design assistance device according to the fourth aspect, the target value acquisition unit may acquire a range of the target value for the observation value of at least one of the plurality of characteristic items, the score function construction unit may construct the score function corresponding to each target value within the range of the target value, the target achievement probability acquisition unit may acquire the overall achievement probability corresponding to each target value within the acquired range of the target value by optimizing each score function, and the output unit may output each target value and the corresponding overall achievement probability in the range of the set target value in association with each other.

According to such an aspect, the change in the overall achievement probability according to the change in the target value of the characteristic item can be recognized by referring to the association between each target value and the overall achievement probability. Therefore, it is easy to set an appropriate target value.

According to a design assistance device according to a sixth aspect, in the design assistance device according to any one of the first to fifth aspects, the target achievement probability acquisition unit may acquire an achievement probability of the target value of each characteristic item, and the output unit may output the achievement probability of the target value of each characteristic item together with the overall achievement probability.

According to such an aspect, the achievement probability of the target value of each characteristic item is output in a mode such as display, so that it is possible to recognize the target value of the characteristic item that is a bottleneck for achieving a high overall achievement probability. Therefore, the overall achievement probability can be easily improved by adjusting the target value.

According to a design assistance device according to a seventh aspect, the design assistance device according to any one of the first to sixth aspects may further include an optimization range acquisition unit that acquires an optimization range that is a search range in optimization of the score function of at least one of the design parameters included in the design parameter group, the optimization range of the design parameter being defined by at least one of an upper limit value, a lower limit value, upper and lower limit values, and a fixed value of a value of the design parameter. The target achievement probability acquisition unit may optimize the score function based on the acquired optimization range.

According to such an aspect, it is possible to obtain the overall achievement probability within the acquired optimization range of the design parameter. Therefore, for example, by resetting the optimization range a plurality of times while confirming the overall achievement probability, it is possible to obtain a suitable design parameter range in development of the product or the like.

According to a design assistance device according to an eighth aspect, in the design assistance device according to any one of the first to seventh aspects, the model construction unit may construct the prediction model of at least one of the plurality of characteristic items based on an input of parameters constituting the prediction model.

According to such an aspect, a part of the calculation of the probability that the target value of the characteristic item is achieved does not depend on the performance data. Therefore, for example, in a case where there is not sufficient performance data or the like, it is possible to prevent a decrease in the accuracy of the overall achievement probability due to deterioration in the estimation accuracy of the distribution of the observation values of the characteristic items in the prediction model.

According to a design assistance device according to a ninth aspect, in the design assistance device according to any one of the first to eighth aspects, the target achievement probability acquisition unit may acquire the design parameter group that maximizes the overall achievement probability by optimizing the score function, and the output unit may output the design parameter group that maximizes the overall achievement probability.

According to such an aspect, it is possible to confirm whether or not the output design parameter group capable of achieving the overall achievement probability is appropriate by referring to the output design parameter group. In addition, production of the product or the like and an experiment can be performed by referring to the output design parameter group.

**Advantageous Effects of Invention**

According to one aspect of the present disclosure, it is possible to easily set a target value of a characteristic item constituting an objective variable in a production process of a product, a product in process, a semi-product, a component, or a prototype.

**Brief Description of Drawings**

FIG. 1 is a diagram illustrating an outline of a process of material design to which a design assistance device according to an embodiment is applied.
FIG. 2 is a block diagram illustrating an example of a functional configuration of the design assistance device according to the embodiment.
FIG. 3 is a hardware block diagram of the design assistance device according to the embodiment.
FIG. 4 is a diagram illustrating an example of a design parameter group regarding a produced material.
FIG. 5 is a diagram illustrating an example of an observation value of a characteristic item regarding a produced material.
FIG. 6 is a diagram illustrating an example of a target value of an acquired characteristic item.
FIG. 7 is a diagram schematically illustrating an example of a display screen (user interface) for inputting a target value and outputting an overall achievement probability.
FIG. 8 is a diagram illustrating an example of an optimization range of an acquired design parameter.
FIG. 9 is a flowchart illustrating an example of content of a design assistance method in the design assistance device according to the embodiment.
FIG. 10 is a diagram schematically illustrating an example of a display screen (user interface) that displays a target value and an overall achievement probability in association with each other.

FIG. 11 is a diagram illustrating a configuration of a design assistance program.

## Description of Embodiments

Hereinafter, embodiments of the present invention will be described in detail with reference to the accompanying drawings. In the description of the drawings, the same or equivalent elements are denoted by the same reference numerals, and redundant description is omitted.

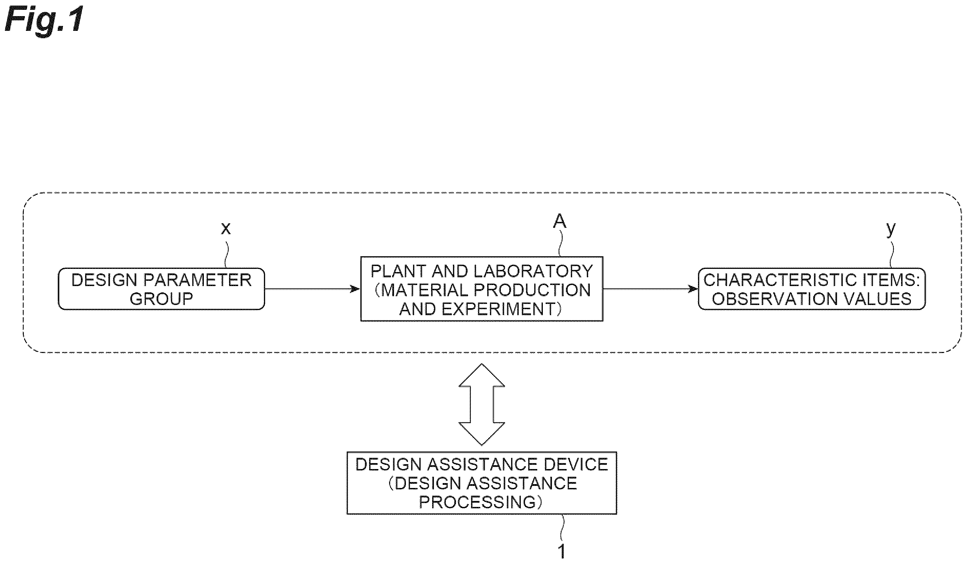

FIG. 1 is a diagram illustrating an outline of a process of designing and developing a material as an example of a process of designing and developing a product, a product in process, a semi-product, a component, or a prototype to which a design assistance device according to an embodiment is applied. Hereinafter, the "product, product in process, semi-product, component, or prototype" is referred to as the "product or the like". A design assistance device 10 of the present embodiment can be applied to a process of designing and developing any product or the like having a plurality of characteristic items indicating characteristics of the product or the like and target values of the respective characteristic items. Specifically, the design assistance device 10 can be applied to setting of preferable target values of characteristic items in a flow including determination of design parameters (explanatory variables), production of a product or the like based on the determined design parameters, and acquisition of observation values (objective variables) of characteristic items of the product or the like. The design assistance device 10 can be applied to, for example, design of products such as automobiles and chemicals, optimization of molecular structures of the chemicals, and the like, in addition to the development and design of the material. Further, the design assistance device 10 of the present embodiment can be applied to an application as a communication tool. Specifically, it can be used for making agreement for the setting of the target values to be achieved in the product or the like while referring to the target values of the characteristic items output by the design assistance device 10, the probability of achieving the target values, and the like, between a producer of the product or the like and a requester (customer) of the production of the product or the like. In the present embodiment, as described above, design assistance processing by the design assistance device 10 will be described by an example of design and development of a material as an example of the design and development of the product or the like.

As illustrated in FIG. 1, the design assistance processing by the design assistance device 10 is applied to material production and experiment in a plant and laboratory A or the like as an example. That is, a material is produced in the plant and laboratory A or the like by a set design parameter group x, and observation values y of a plurality of characteristic items indicating characteristics of the material are acquired based on the produced material. Note that the material production and experiment in the plant and laboratory A may be a simulation.

The design assistance device 10 assists setting of the target values based on performance data including the design parameter group x and the observation values y of the plurality of characteristic items of the material produced based on the design parameter group x. Specifically, the design assistance device 10 constructs a prediction model for predicting the observation values of the characteristic items based on the performance data including the design parameter group x and the observation values y, constructs a score function including an overall achievement probability term indicating an overall achievement probability that the target values of all the characteristic items are achieved, which is calculated based on the prediction model, and acquires and outputs the overall achievement probability by optimizing the score function.

For example, as an example of design and development of a material product, in a case where a certain material is produced by mixing a plurality of polymers and additives, the design assistance device 10 is used to set target values of a plurality of characteristic items using design parameter groups such as blending amounts of each polymer and additive as design variables and using observation values of an elastic modulus and a thermal expansion coefficient which are characteristic items as objective variables.

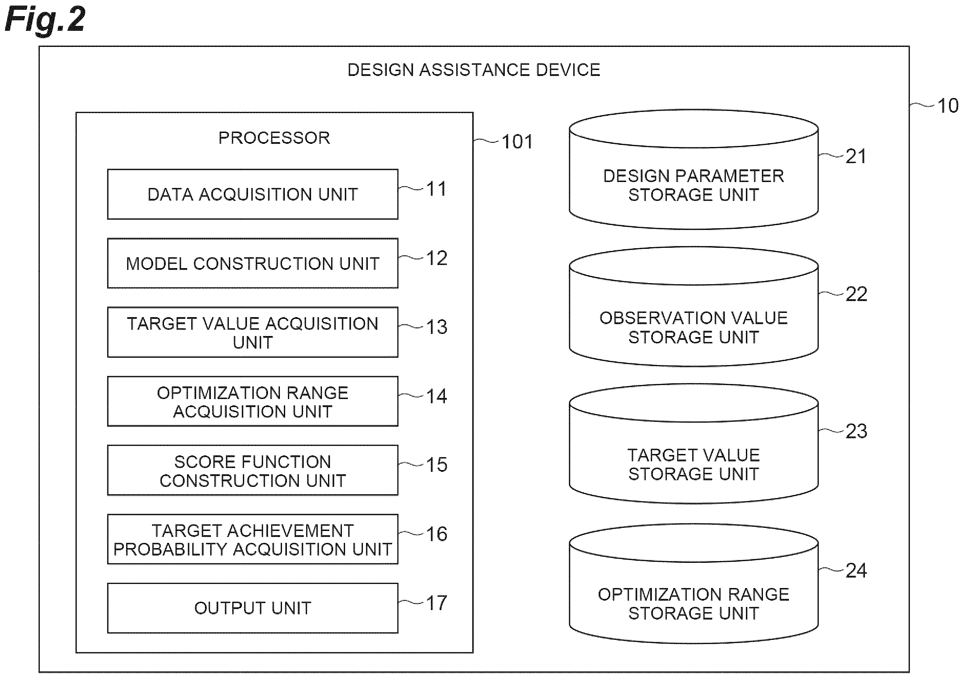

FIG. 2 is a block diagram illustrating an example of a functional configuration of the design assistance device according to the embodiment. The design assistance device 10 of the present embodiment is a device that assists setting of target values for observation values of a plurality of characteristic items indicating characteristics of a material produced based on a design parameter group including a plurality of design parameters. As illustrated in FIG. 2, the design assistance device 10 can include functional units configured in a processor 101, a design parameter storage unit 21, an observation value storage unit 22, a target value storage unit 23, and an optimization range storage unit 24. Each functional unit will be described later.

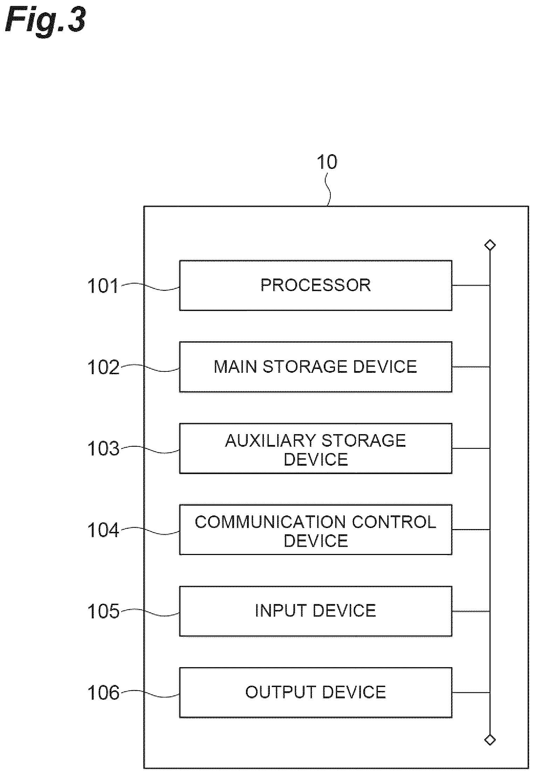

FIG. 3 is a diagram illustrating an example of a hardware configuration of a computer 100 constituting the design assistance device 10 according to the embodiment. Note that the computer 100 can constitute the design assistance device 10.

As an example, the computer 100 includes a processor 101, a main storage device 102, an auxiliary storage device 103, and a communication control device 104 as hardware components. The computer 100 constituting the design assistance device 10 may further include an input device 105 such as a keyboard, a touch panel, or a mouse which is an input device, and an output device 106 such as a display.

The processor 101 is an arithmetic device that executes an operating system and an application program. Examples of the processor include a central processing unit (CPU) and a graphics processing unit (GPU), but the type of the processor 101 is not limited thereto. For example, the processor 101 may be a combination of a sensor and a dedicated circuit. The dedicated circuit may be a programmable circuit such as a field-programmable gate array (FPGA), or may be another type of circuit.

The main storage device 102 is a device that stores a program for realizing the design assistance device 10 and the like, a calculation result output from the processor 101, and the like. The main storage device 102 includes, for example, at least one of a read only memory (ROM) and a random access memory (RAM).

The auxiliary storage device 103 is generally a device capable of storing a larger amount of data than the main storage device 102. The auxiliary storage device 103 includes, for example, a non-volatile storage medium such as a hard disk or a flash memory. The auxiliary storage device 103 stores a design assistance program P1 for causing the computer 100 to function as the design assistance device 10 and the like and various data.

The communication control device 104 is a device that executes data communication with another computer via a communication network. The communication control device 104 includes, for example, a network card or a wireless communication module.

Each functional element of the design assistance device 10 is realized by loading the corresponding program P1 on the processor 101 or the main storage device 102 and causing the processor 101 to execute the program. The program P1 includes a code for realizing each functional element of a corresponding server. The processor 101 operates the communication control device 104 according to the program P1 to read and write data in the main storage device 102 or the auxiliary storage device 103. By such processing, each functional element of the corresponding server is realized.

The program P1 may be provided after being fixedly recorded on a tangible recording medium such as a CD-ROM, a DVD-ROM, or a semiconductor memory. Alternatively, at least one of these programs may be provided via a communication network as a data signal superimposed on a carrier.

Referring again to FIG. 2, the design assistance device 10 includes a data acquisition unit 11, a model construction unit 12, a target value acquisition unit 13, an optimization range acquisition unit 14, a score function construction unit 15, a target achievement probability acquisition unit 16, and an output unit 17. The design parameter storage unit 21, the observation value storage unit 22, the target value storage unit 23, and the optimization range storage unit 24 may be configured in the design assistance device 10 as illustrated in FIG. 2, or may be configured as other devices accessible from the design assistance device 10.

The data acquisition unit 11 acquires a plurality of pieces of performance data regarding a produced material. The performance data includes a pair of a design parameter group and respective observation values of a plurality of characteristic items. The design parameter storage unit 21 is a storage unit that stores the design parameter group in the performance data, and may include, for example, the main storage device 102, the auxiliary storage device 103, and the like. The observation value storage unit 22 is a storage unit that stores the observation values in the performance data.

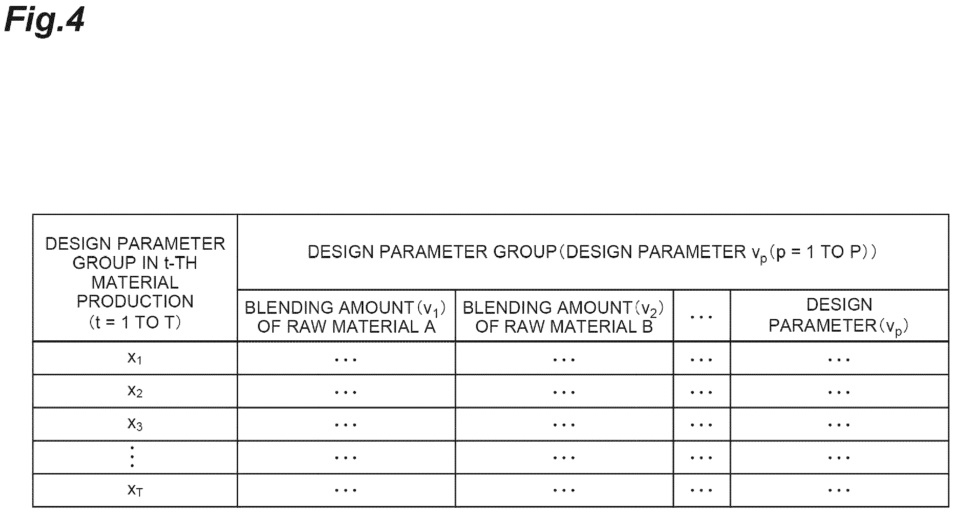

FIG. 4 is a diagram illustrating an example of the design parameter group stored in the design parameter storage unit 21. As illustrated in FIG. 4, the design parameter storage unit 21 stores a design parameter group xt in t-th material production (t = 1 to T). The design parameter group x includes, for example, P design parameters $v_p$ (p = 1 to P) of 1 to P. As an example, the design parameter group x may include a blending amount $v_1$ of a raw material A, a blending amount $v_2$ of a raw material B, ..., and a design parameter $v_P$, and may constitute vector data of the number of dimensions P according to the number of design parameters. The design parameter may be, for example, non-vector data such as a molecular structure and an image other than those exemplified. In addition, the design parameter may be data indicating an option among a plurality of molecules.

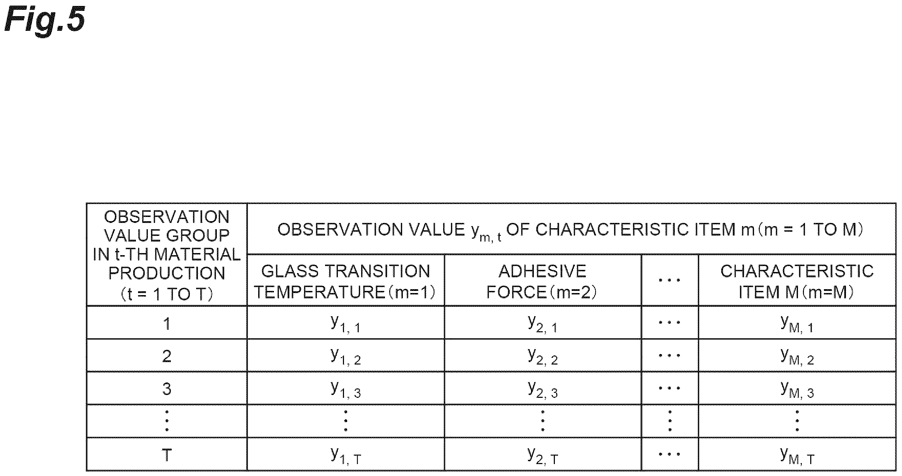

FIG. 5 is a diagram illustrating an example of the observation value y stored in the observation value storage unit 22. As illustrated in FIG. 5, the observation value storage unit 22 stores observation values $y_{m,t}$ of a plurality of characteristic items m (m = 1 to M) indicating material characteristics in the t-th material production (t = 1 to T). As an example, the characteristic items m may include a glass transition temperature $y_{1,t}$, an adhesive force $y_{2,t}$, and a characteristic item M ($y_{M,t}$). A pair of the design parameter group xt and the observation value $y_{m,t}$ constitutes performance data.

The model construction unit 12 constructs a prediction model based on the performance data. The prediction model is a model that predicts the observation value $y_m$ of the characteristic item m as a probability distribution, or an approximation or an alternate index thereof based on the design parameter group x. The type of the model constituting the prediction model is not limited as long as the model is a model that can predict the observation value $y_m$ as the probability distribution, or the approximation or the alternate index thereof. The prediction model that predicts the observation value $y_m$ as the alternate index of the probability distribution predicts the probability distribution of the observation value using, for example, a distribution (random forest) of a prediction value of a predictor constituting an ensemble, a distribution (neural network) obtained by a Monte Carlo dropout, a distribution (arbitrary machine learning method) of predictions of a plurality of predictors constructed under different conditions, or the like as the alternate index.

For example, the prediction model may be a regression model with the design parameter group x as an input and the probability distribution of the observation value $y_m$ as an output. In a case where the prediction model is the regression model, the prediction model may include, for example, any one of regression models such as Gaussian process regression, random forest, and neural network. The model construction unit 12 may construct the prediction model by a known machine learning method using the performance data. The model construction unit 12 may construct the prediction model by a machine learning method for applying the performance data to the prediction model and updating the parameters of the prediction model.

Further, the prediction model may be a machine learning model that predicts a probability distribution of an observation value, or an approximation or an alternate index thereof using any one of a posterior distribution of a prediction value based on Bayesian theory, a distribution of a prediction value of a predictor constituting an ensemble, a theoretical formula of a prediction interval and a confidence interval of a regression model, a Monte Carlo dropout, and a distribution of predictions of a plurality of predictors constructed under different conditions. The prediction of the probability distribution of the observation value or the alternate index thereof can be obtained by a model-specific method. The probability distribution of the observation value, or the approximation or the alternate index thereof can be obtained based on the posterior distribution of the prediction value in the case of the Gaussian process regression and the Bayesian neural network, based on the distribution of the prediction of the predictor constituting the ensemble in the case of the random forest, based on the prediction interval and the confidence interval in the case of the linear regression, and based on the Monte Carlo dropout in the case of the neural network. However, a method for calculating the distribution of the observation value or the alternate index thereof for each machine learning model is not limited to the above method.

In addition, the arbitrary model may be extended to a model capable of predicting the probability distribution of the observation value or the alternate index thereof. For example, a model using a distribution of a prediction value of each model obtained by constructing a plurality of data sets by a bootstrap method or the like and constructing a prediction model for each data set as the alternate index of the probability distribution of the observation value can be exemplified. However, a method for extending the machine learning model to a model capable of predicting the probability distribution of the observation value or the alternate index thereof is not limited to the above method.

Further, the prediction model may be constructed by the linear regression, the PLS regression, the Gaussian process regression, the bagging ensemble learning such as the random forest, the boosting ensemble learning such as the gradient boosting, the support vector machine, the neural network, and the like.

In the prediction model constructed as the Gaussian process regression, the probability distribution of the observation value is predicted by inputting the design parameter group x in the performance data constituting the explanatory variable of teacher data, the observation value y constituting the objective variable, and the design parameter x to be predicted to the model.

In addition, the model construction unit 12 may tune a hyperparameter of the prediction model by a known hyperparameter tuning method. That is, the model construction unit 12 may update the hyperparameter of the prediction model constructed by the Gaussian process regression by maximum likelihood estimation using a vector representing the design parameter group x that is the explanatory variable in the performance data and the observation value y that is the objective variable.

Further, the prediction model may be constructed by a classification model. In a case where the prediction model is the classification model, the model construction unit 12 can construct the prediction model by a machine learning method capable of known probability distribution evaluation using the performance data.

As described above, the model construction unit 12 constructs the prediction model by the predetermined regression model or classification model, so that the probability distribution of the observation value of the characteristic item can be acquired based on an arbitrary design parameter group x.

Further, the prediction model may be a single task model that predicts an observation value of one characteristic item as a probability distribution, or an approximation or an alternate index thereof, or a multi-task model that predicts observation values of a plurality of characteristic items as a probability distribution, or an approximation or an alternate index thereof. As such, by constructing the prediction model by the multi-task model or the single task model appropriately configured according to the property of the characteristic item, the accuracy of prediction of the observation value by the prediction model can be improved.

The model construction unit 12 may construct a prediction model of at least one of the plurality of characteristic items based on an input of parameters constituting the prediction model. Specifically, the model construction unit 12 may construct the prediction model based on an input of parameters that constitute the prediction model and contribute to probability calculation.

For example, in a case where the prediction model is configured as a model that predicts the observation value of the characteristic item according to the Gaussian distribution, the model construction unit 12 may acquire a standard deviation or a variance of the Gaussian distribution, which is a parameter representing the distribution of the observation value, based on an input from the user or the like, and construct the prediction model of the characteristic item based on the acquired standard deviation or variance.

As described above, since the parameters constituting the prediction model and contributing to the calculation of the probability are input, a part of the probability calculation does not depend on the performance data. Therefore, for example, in a case where there is no performance data having the sufficient amount and accuracy, it is possible to prevent a decrease in the accuracy of the overall achievement probability due to deterioration in the estimation accuracy of the observation value of the characteristic item in the prediction model.

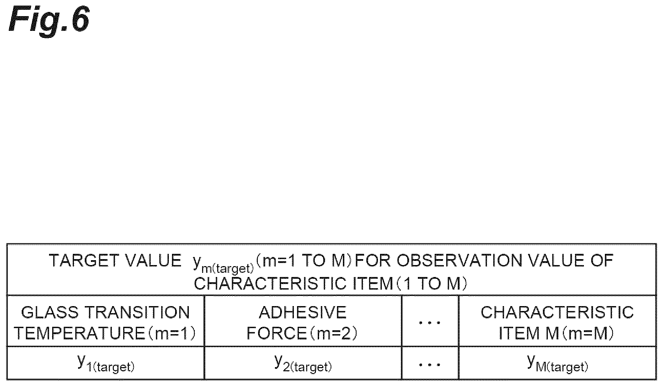

The target value acquisition unit 13 acquires a target value for the observation value of each characteristic item. FIG. 6 is a diagram illustrating an example of a target value $y_{m(target)}$ of each characteristic item stored in the target value storage unit 23. The target value storage unit 23 is a storage unit that stores a target value input by the user via a predetermined user interface or a preset target value.

As illustrated in FIG. 6, the target value storage unit 23 stores a target value $y_{m(target)}$ of a characteristic item m (m = 1 to M). As an example, the target value $y_{m(target)}$ may include a target value $y_{1(target)}$ of a glass transition temperature, a target value $y_{2(target)}$ of an adhesive force, and a target value $y_{M(target)}$ of a characteristic item M.

The target value acquisition unit 13 may acquire a target value for at least one of the plurality of characteristic items based on the input from the user.

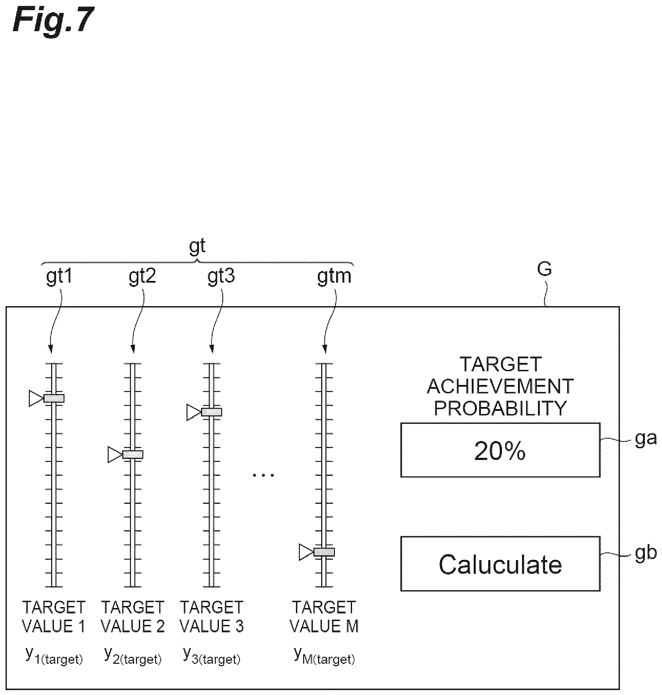

FIG. 7 is a diagram schematically illustrating an example of a display screen (user interface) for inputting a target value and outputting an overall achievement probability. As illustrated in FIG. 7, the design assistance device 10 can cause a display or the like which is one mode of the output device 106 to display a user interface G. The user interface G includes an operation object gt for inputting a target value $y_{m(target)}$. Specifically, the user interface G includes operation objects gt1, gt2, gt3, ..., and gtm for inputting respective target values $y_{1(target)}$, $y_{2(target)}$, $y_{3(target)}$, ..., and $y_{M(target)}$ of the characteristic items 1, 2, 3, ..., and M. The target value acquisition unit 13 acquires the target value of the characteristic item based on the operation input by the user of the operation object gt.

According to such a mode of acquiring the target value, the user can easily set the target value of each characteristic item. Therefore, by repeatedly performing the input of the target value and the output of the overall achievement probability while changing the input target value, it is possible to easily set an appropriate target value. Note that objects ga and gb included in the user interface G will be described later.

In addition, the target value acquisition unit 13 may acquire the target value for at least one of the plurality of characteristic items from a predetermined database that stores the target values of the characteristic items in advance.

For example, a target value group having performance as appropriate target values may be stored in the target value storage unit 23 in advance, and the target value acquisition unit 13 may acquire the target value group having performance from the target value storage unit 23. As such, by storing an appropriate target value group in advance, an initial target value group at the time of setting and examining the target value can be easily acquired.

In addition, a performance value having performance as an observation value of each characteristic item may be stored in the target value storage unit 23 in advance, and the target value acquisition unit 13 may acquire the performance value of each characteristic item from the target value storage unit 23. As such, by applying the performance value to the initial target value, appropriate target setting becomes easy.

In addition, by using the target value of each characteristic item stored in advance as the initial target value, for example, in a case where the number of characteristic items is large, when the acquisition of the target value is based on the input from the user, the labor related to the input becomes complicated, but the labor can be reduced.

The optimization range acquisition unit 14 acquires an optimization range of at least one of the design parameters included in the design parameter group. The optimization range is a search range of each design parameter that is an explanatory variable in optimization of the score function.

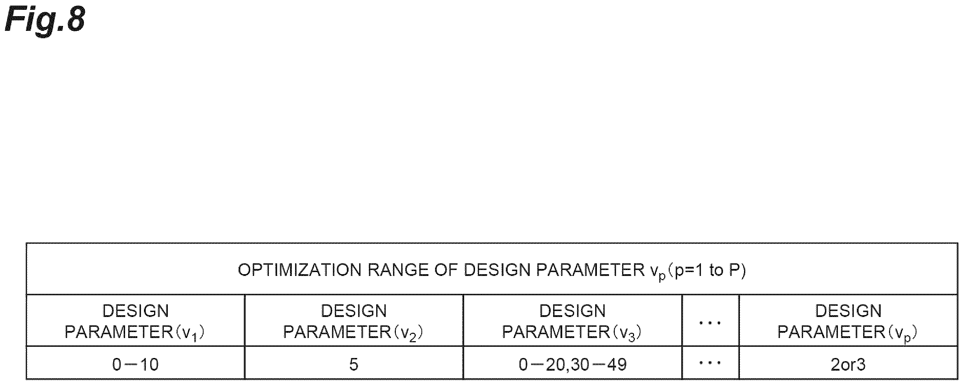

The optimization range storage unit 24 is a storage unit that stores the optimization range of the design parameter $v_p$. FIG. 8 is a diagram illustrating an example of the optimization range of each design parameter $v_p$ stored in the optimization range storage unit 24. As illustrated in FIG. 8, the optimization range storage unit 24 stores the optimization range of each design parameter $v_p$. The optimization range of the design parameter $v_p$ can be set in a case other than a case where a possible value of the design parameter as the explanatory variable is limited to a plurality of finite candidates.

The optimization range of the design parameter $v_p$ is defined by at least one of an upper limit value, a lower limit value, upper and lower limit values, and a fixed value of the value of the design parameter, and may be defined by a plurality of these values. As illustrated in FIG. 8, an optimization range of a design parameter $v_1$ is defined by upper and lower limit values and set to "0-10". An optimization range of a design parameter $v_2$ is defined by a fixed value and set to "5". An optimization range of a design parameter $v_3$ is defined by two upper and lower limit values and set to "0-10 and 30-49". The optimization range of the design parameter $v_p$ is defined by two fixed values and set to "2 or 3".

In a case where there is a desired value as the value of the design parameter, by defining the optimization range of the design parameter $v_p$ by a fixed value, the design parameter $v_p$ is fixed and optimization is performed, so that it is possible to obtain the overall achievement probability under the fixed desired design parameter as a result of the optimization.

As a more specific example, by setting the optimization range of the design parameter $v_p$ representing the amount of expensive material to "0", it is possible to perform optimization on condition that the material is not used. In addition, as a result of setting the optimization range of the certain design parameter $v_p$ to a fixed value and performing the optimization, when a low target achievement probability is obtained, the optimization range of the design parameter $v_p$ is changed to, for example, upper and lower limit values having a certain width, and the target achievement probability is evaluated by performing the optimization again, so that it is possible to easily examine a suitable optimization range.

The optimization range storage unit 24 may store the optimization range of each design parameter $v_p$ input by the user via the input device 105. The optimization range acquisition unit 14 can acquire the optimization range of each design parameter $v_p$ input by the user. In this case, it is easy for the user to set and change the optimization range of the design parameter $v_p$.

As described above, the optimization of the score function is performed within the acquired optimization range of the design parameter, and the overall achievement probability within the specified optimization range is obtained. Therefore, for example, by setting a range that can be easily adopted as the design parameter as the optimization range, it is possible to obtain the overall achievement probability in the range of the design parameter that can be easily adopted. In addition, in a case where the overall achievement probability in the range of the design parameter that can be easily adopted is low, by repeating the change of the range of the design parameter and the confirmation of the overall achievement probability, it is possible to obtain the range of the design parameter that has a high expectation of the target achievement and can be relatively easily adopted.

The score function construction unit 15 constructs a score function including at least an overall achievement probability term. The overall achievement probability term indicates an overall achievement probability which is a probability that the target values of all the characteristic items are achieved. The overall achievement probability is calculated with a design parameter group as a variable based on the prediction model. The configuration of the score function is not limited as long as the score function is a function including an overall achievement probability term.

Specifically, the score function construction unit 15 constructs a score function A(x) shown in the following Formula (1).

$$A(x) = g(P(x)) \dots (1)$$

In Formula (1), g(P(x)) is a target achievement probability term. That is, the score function A(x) includes at least the target achievement probability term g(P(x)).

Note that the score function of Formula (1) is an example, and the score function may include a term other than the target achievement probability term.

The target achievement probability term can be configured to include the overall achievement probability P(x). For example, assuming that target achievement events of the respective characteristic items are independent of each other, the overall achievement probability P(x) may be defined as shown in the following Formula (2).

$$P(x) = \Pi_{1<=m<=M}Pm(x) \dots (2)$$

That is, the overall achievement probability P(x) is the product of the achievement probability Pm(x) of each characteristic item m (m = 1 to M). Since the prediction model can predict the probability distribution of the observation value of the characteristic item based on the design parameter group x, the achievement probability Pm(x) of each characteristic item can be expressed as a function having the design parameter group x using the prediction model of each characteristic item as an input variable. In addition, the overall achievement probability P(x) may be expressed as a function having the design parameter group x based on the prediction models of all the characteristic items as an input variable without going through the calculation of the achievement probability of each characteristic item.

For example, the target achievement probability term g(P(x)) may include the overall achievement probability P(x) as shown in Formula (3), or may include the logarithm of the overall achievement probability P(x) as shown in Formula (4).

$$g(P(x)) = P(x) \dots (3)$$

$$g(P(x)) = \log(P(x)) \dots (4)$$

Further, the target achievement probability term may be a term obtained by further multiplying the overall achievement probability P(x) or the logarithm of the overall achievement probability P(x) by a coefficient, or may further include a term for adding another element. In an example of the score function constructed in this way, its optimization can be treated as a maximization problem.

As described above, in the example of the present embodiment, since the prediction model is configured to output the probability distribution of the observation value, the achievement probability Pm(x) of the target value of each characteristic item m according to the design parameter group x can be obtained. Since the overall achievement probability calculated by the product of the achievement probability Pm(x) of the target value of each characteristic item m is included in the target achievement probability term of the score function, the overall achievement probability is appropriately reflected in the score function to be optimized.

The target achievement probability acquisition unit 16 acquires the overall achievement probability by optimizing the score function. In the present embodiment, the score function A(x) is configured as shown in Formula (4) based on the above Formulas (1) and (3).

$$A(x) = P(x) \ldots (4)$$

The target achievement probability acquisition unit 16 can acquire the overall achievement probability as an output of the score function A(x) by optimization (maximization) of the score function A(x).

In the example of Formula (4), the score function outputs the overall achievement probability. However, in a case where the output of the score function is a value obtained by multiplying the overall achievement probability by another element or adding another element to the overall achievement probability, the target achievement probability acquisition unit 16 may acquire the overall achievement probability P(x) based on the design parameter group x obtained by optimization of the score function and the target value of each characteristic item.

The output unit 17 outputs the overall achievement probability acquired by the target achievement probability acquisition unit 16. Although a mode of the output is not limited, the output unit 17 may cause a display that is one mode of the output device 106 to display the overall achievement probability. As illustrated in FIG. 7, the output unit 17 may display the overall achievement probability acquired by the target achievement probability acquisition unit 16 in an overall achievement probability field ga of the user interface G.

In addition, the output unit 17 may output the target value acquired by the target value acquisition unit 13 together with the overall achievement probability. As described above, since the user interface G illustrated in FIG. 7 includes an operation object gt for inputting the target value $y_{m(target)}$, the output unit 17 can output and display both the set target value and the overall achievement probability by causing the display to display the operation object gt and the overall achievement probability field ga.

As described above, the target value of the characteristic item in the optimization of the score function and the overall achievement probability acquired by the optimization are output together in a mode such as display, so that a correspondence relation between the target value group and the overall achievement probability can be easily recognized.

In addition, the output unit 17 may output the achievement probability (Pm(x)) of the target value of each characteristic item m that can be acquired in the process of acquiring the overall achievement probability by the target achievement probability acquisition unit 16, together with the overall achievement probability. For example, the achievement probability of the target value of each characteristic item m is displayed on the display or the like, so that the target value of the characteristic item that is a bottleneck for achieving a high overall achievement probability can be recognized. Therefore, by adjusting the target value, for example, relaxing the target value, the overall achievement probability can be easily improved.

The target achievement probability acquisition unit 16 may further acquire a design parameter group that maximizes the overall achievement probability by optimizing the score function. The output unit 17 may further output the design parameter group that maximizes the overall achievement probability, which is acquired by the target achievement probability acquisition unit 16. By referring to the output design parameter group, it is possible to confirm whether or not the output design parameter group capable of achieving the overall achievement probability is appropriate. In addition, production of the product or the like and an experiment can be performed by referring to the output design parameter group.

Further, as illustrated in FIG. 7, the user interface G may include an instruction button gb for receiving an execution instruction of the process of the optimization based on the set target value. When an instruction input by the user for the instruction button gb is received in the design assistance device 10, construction and optimization of the score function based on the set target value are performed, and the overall achievement probability is displayed in the overall achievement probability field ga. As such, while repeatedly performing setting of the target value, construction and optimization of the score function, and output of the overall achievement probability by reference and operation of the user interface G, it is possible to examine an appropriate target value.

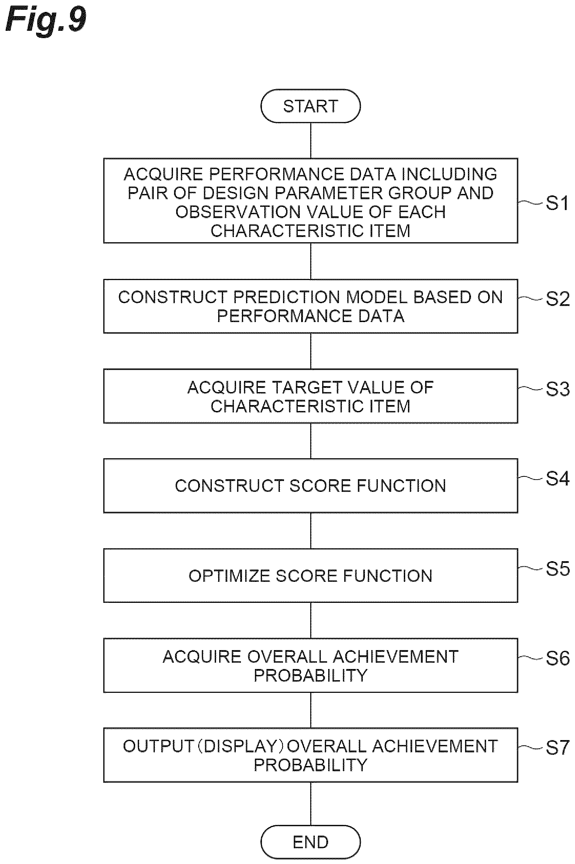

Next, design assistance processing by the design assistance device 10 in the present embodiment will be described in detail. FIG. 9 is a flowchart illustrating an example of content of a design assistance method in the design assistance device 10 according to the embodiment. The design assistance method is executed by implementing the respective functional units 11 to 17 by reading the design assistance program P1 into the processor 101 and executing the program.

In step S1, the data acquisition unit 11 acquires performance data including a pair of a design parameter group xt (t is an integer of 1 to T) and an observation value $y_{m,t}$ of each characteristic item.

In step S2, the model construction unit 12 constructs each prediction model of the characteristic item m based on the performance data.

In step S3, the target value acquisition unit 13 acquires a target value for the observation value of each characteristic item m.

In step S4, the score function construction unit 15 constructs a score function based on the prediction model constructed in step S2 and the target value of each characteristic item acquired in step S3.

In step S5, the target achievement probability acquisition unit 16 optimizes the score function. Here, the optimization range acquisition unit 14 acquires the optimization range of each design parameter $v_p$, and the target achievement probability acquisition unit 16 optimizes the score function based on the acquired optimization range.

In step S6, the target achievement probability acquisition unit 16 acquires the overall achievement probability obtained based on the optimization of the score function A.

In step S7, the output unit 17 outputs (displays) the overall achievement probability acquired by the target achievement probability acquisition unit 16 in step S6.

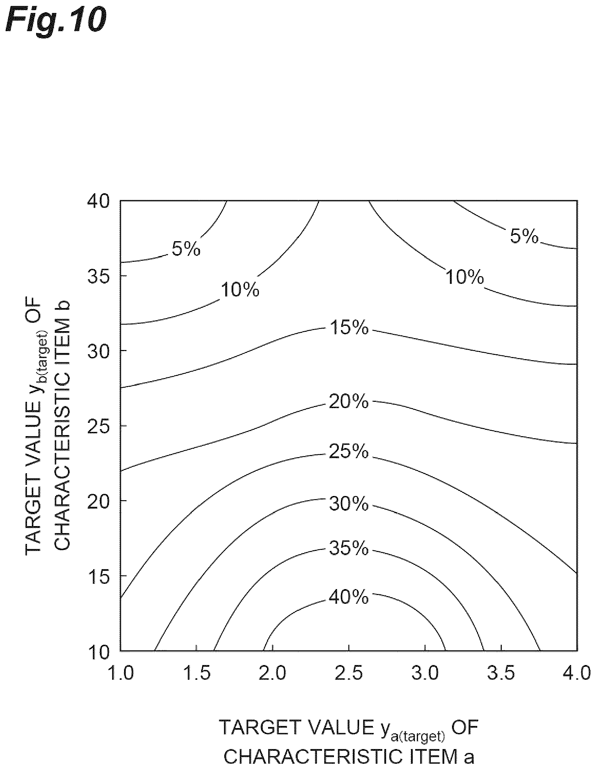

Next, another example of the output of the overall achievement probability will be described with reference to FIG. 10. FIG. 10 is a diagram schematically illustrating an example of a display screen (user interface) that displays a target value and an overall achievement probability in association with each other.

The target value acquisition unit 13 may acquire a range of a target value for the observation value of at least one of the plurality of characteristic items. That is, the target value acquisition unit 13 may acquire a numerical range instead of one value indicating the target value. In the example illustrated in FIG. 10, for convenience of explanation, a case is illustrated in which the target value acquisition unit 13 acquires numerical ranges ($y_{a(target)}$: 1.0 to 4.0 and $y_{b(target)}$: 10 to 40) of target values of two characteristic items a and b in at least two characteristic items based on an input from the user or the like.

The score function construction unit 15 constructs a score function corresponding to each target value within the range of the target value. Specifically, for example, the score function construction unit 15 constructs a score function for each combination of points obtained by dividing the range of the target value of each characteristic item at predetermined intervals.

The target achievement probability acquisition unit 16 optimizes each score function to acquire an overall achievement probability corresponding to a combination of the target values within the acquired range of the target values. In the example illustrated in FIG. 10 in which the output unit 17 outputs each target value within the set target value range and the corresponding overall achievement probability in association with each other, the target value $y_{a(target)}$ is set on a horizontal axis, and the target value $y_{b(target)}$ is set on a vertical axis. The output unit 17 outputs an overall achievement probability corresponding to a combination of the target value $y_{a(target)}$ and the target value $y_{b(target)}$, and draws and outputs a contour line based on the output overall achievement probability.

By outputting such a display screen, it is possible to recognize the change in the overall achievement probability according to the change in the target value of the characteristic item by referring to the association between the combination of each target value and the overall achievement probability. Therefore, it is easy to set an appropriate target value.

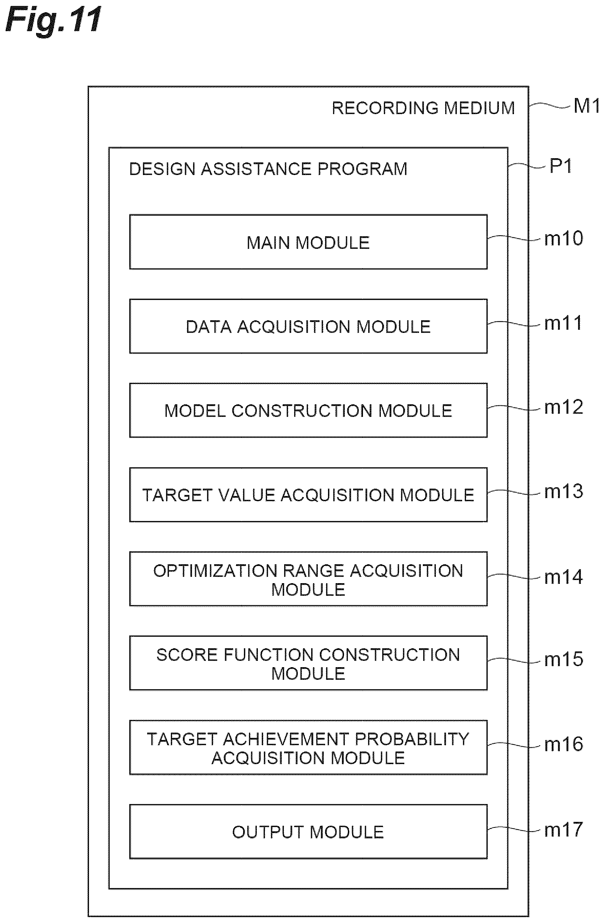

Next, a design assistance program for causing a computer to function as the design assistance device 10 of the present embodiment will be described. FIG. 11 is a diagram illustrating a configuration of the design assistance program.

The design assistance program P1 includes a main module m10 that generally controls design assistance processing in the design assistance device 10, a data acquisition module m11, a model construction module m12, a target value acquisition module m13, an optimization range acquisition module m14, a score function construction module m15, a target achievement probability acquisition module m16, and an output module m17. The respective modules m11 to m17 implement the respective functions for the data acquisition unit 11, the model construction unit 12, the target value acquisition unit 13, the optimization range acquisition unit 14, the score function construction unit 15, the target achievement probability acquisition unit 16, and the output unit 17.

Note that the design assistance program P1 may be transmitted via a transmission medium such as a communication line or may be stored in the recording medium M1 as illustrated in FIG. 11.

According to the design assistance device 10, the design assistance method, and the design assistance program P1 of the present embodiment described above, the prediction model is constructed based on the performance data, the target value for each characteristic item is acquired, and the score function including the target achievement probability term is constructed based on the acquired target value and the prediction model. Then, the overall achievement probability is acquired and output by optimizing the score function. Therefore, since it is possible to determine whether or not the target value is appropriate by referring to the output overall achievement probability, it is easy to set an appropriate target value.

The present invention has been described in detail based on the embodiments. However, the present invention is not limited to the above embodiments. The present invention can be variously modified without departing from the gist thereof.

**Reference Signs List**

10   Design assistance device
11   Data acquisition unit
12   Model construction unit
13   Target value acquisition unit
14   Optimization range acquisition unit
15   Score function construction unit
16   Target achievement probability acquisition unit
17   Output unit

21 Design parameter storage unit
22 Observation value storage unit
23 Target value storage unit
24 Optimization range storage unit
M1 Recording medium
m10 Main module
m11 Data acquisition module
m12 Model construction module
m13 Target value acquisition module
m14 Optimization range acquisition module
m15 Score function construction module
m16 Target achievement probability acquisition module
m17 Output module
P1 Design assistance program

**Claims**

1. A design assistance device that assists setting of target values for observation values of a plurality of characteristic items indicating characteristics of a product, a product in process, a semi-product, a component, or a prototype produced based on a design parameter group including a plurality of design parameters, the design assistance device comprising:

   a data acquisition unit configured to acquire a plurality of pieces of performance data each including the design parameter group and the respective observation values of the plurality of characteristic items for the produced product, in-process product, semi-product, component, or prototype;
   a model construction unit configured to construct, based on the performance data, a prediction model for predicting the observation values of the characteristic items as a probability distribution, or an approximation or an alternate index thereof based on the design parameter group;
   a target value acquisition unit configured to acquire the target values for the observation values of the respective characteristic items;
   a score function construction unit configured to construct a score function including at least a target achievement probability term indicating an overall achievement probability that is a probability that the target values of all the characteristic items are achieved, which is calculated using the design parameter group as a variable based on the prediction model;
   a target achievement probability acquisition unit configured to acquire the overall achievement probability by optimizing the score function; and
   an output unit configured to output the overall achievement probability.

2. The design assistance device according to claim 1, wherein the target value acquisition unit acquires the target value for at least one of the plurality of characteristic items based on an input from a user.

3. The design assistance device according to claim 1, wherein the target value acquisition unit acquires the target value for at least one of the plurality of characteristic items from a predetermined database that stores the target values of the characteristic items in advance.

4. The design assistance device according to claim 1, wherein the output unit outputs the target values acquired by the target value acquisition unit together with the overall achievement probability.

5. The design assistance device according to claim 4,

   wherein the target value acquisition unit acquires a range of the target value for the observation value of at least one of the plurality of characteristic items,
   wherein the score function construction unit constructs the score function corresponding to each target value within the range of the target value,
   wherein the target achievement probability acquisition unit acquires the overall achievement probability corresponding to each target value within the acquired range of the target value by optimizing each score function, and
   wherein the output unit outputs each target value and the corresponding overall achievement probability in the range of the set target value in association with each other.

6. The design assistance device according to claim 1,

   wherein the target achievement probability acquisition unit acquires an achievement probability of the target value of each characteristic item, and
   wherein the output unit outputs the achievement probability of the target value of each characteristic item together with the overall achievement probability.

7. The design assistance device according to claim 1, further comprising:

   an optimization range acquisition unit configured to acquire an optimization range that is a search range in optimization of the score function of at least one of the design parameters included in the design parameter group, the optimization range of the design parameter being defined by at least one of an upper limit value, a lower limit value, upper and lower limit values, and a fixed value of a value of the design parameter,

wherein the target achievement probability acquisition unit optimizes the score function based on the acquired optimization range.

8. The design assistance device according to claim 1, wherein the model construction unit constructs the prediction model of at least one of the plurality of characteristic items based on an input of parameters constituting the prediction model.

9. The design assistance device according to claim 1,

wherein the target achievement probability acquisition unit acquires the design parameter group that maximizes the overall achievement probability by optimizing the score function, and wherein the output unit outputs the design parameter group that maximizes the overall achievement probability.

10. A design assistance method in a design assistance device that assists setting of target values for observation values of a plurality of characteristic items indicating characteristics of a product, a product in process, a semi-product, a component, or a prototype produced based on a design parameter group including a plurality of design parameters, the design assistance method comprising:

a data acquisition step of acquiring a plurality of pieces of performance data each including the design parameter group and the respective observation values of the plurality of characteristic items for the produced product, in-process product, semi-product, component, or prototype; a model construction step of constructing, based on the performance data, a prediction model for predicting the observation values of the characteristic items as a probability distribution, or an approximation or an alternate index thereof based on the design parameter group; a target value acquisition step of acquiring the target values for the observation values of the respective characteristic items; a score function construction step of constructing a score function including at least a target achievement probability term indicating an overall achievement probability that is a probability that the target values of all the characteristic items are achieved, which is calculated using the design parameter group as a variable based on the prediction model; a target achievement probability acquisition step of acquiring the overall achievement probability by optimizing the score function; and

an output step of outputting the overall achievement probability.

11. A design assistance program for causing a computer to function as a design assistance device that assists setting of target values for observation values of a plurality of characteristic items indicating characteristics of a product, a product in process, a semi-product, a component, or a prototype produced based on a design parameter group including a plurality of design parameters, the design assistance program for causing the computer to implement:

a data acquisition function of acquiring a plurality of pieces of performance data each including the design parameter group and the respective observation values of the plurality of characteristic items for the produced product, in-process product, semi-product, component, or prototype; a model construction function of constructing, based on the performance data, a prediction model for predicting the observation values of the characteristic items as a probability distribution, or an approximation or an alternate index thereof based on the design parameter group; a target value acquisition function of acquiring the target values for the observation values of the respective characteristic items; a score function construction function of constructing a score function including at least a target achievement probability term indicating an overall achievement probability that is a probability that the target values of all the characteristic items are achieved, which is calculated using the design parameter group as a variable based on the prediction model; a target achievement probability acquisition function of acquiring the overall achievement probability by optimizing the score function; and an output function of outputting the overall achievement probability.

# Fig.1

DESIGN PARAMETER GROUP → PLANT AND LABORATORY (MATERIAL PRODUCTION AND EXPERIMENT) → CHARACTERISTIC ITEMS: OBSERVATION VALUES

x        A        y

DESIGN ASSISTANCE DEVICE (DESIGN ASSISTANCE PROCESSING)

1

EP 4 535 216 A1

**Fig.2**

DESIGN ASSISTANCE DEVICE ~10

PROCESSOR ~101

DATA ACQUISITION UNIT ~11

MODEL CONSTRUCTION UNIT ~12

TARGET VALUE ACQUISITION UNIT ~13

OPTIMIZATION RANGE ACQUISITION UNIT ~14

SCORE FUNCTION CONSTRUCTION UNIT ~15

TARGET ACHIEVEMENT PROBABILITY ACQUISITION UNIT ~16

OUTPUT UNIT ~17

DESIGN PARAMETER STORAGE UNIT ~21

OBSERVATION VALUE STORAGE UNIT ~22

TARGET VALUE STORAGE UNIT ~23

OPTIMIZATION RANGE STORAGE UNIT ~24

# Fig.3

101 — PROCESSOR

102 — MAIN STORAGE DEVICE

103 — AUXILIARY STORAGE DEVICE

104 — COMMUNICATION CONTROL DEVICE

105 — INPUT DEVICE

106 — OUTPUT DEVICE

## Fig.4

| DESIGN PARAMETER GROUP IN t-TH MATERIAL PRODUCTION ($t = 1$ TO $T$) | DESIGN PARAMETER GROUP (DESIGN PARAMETER $v_p$ ($p = 1$ TO $P$)) | | | |
|---|---|---|---|---|
| | BLENDING AMOUNT ($v_1$) OF RAW MATERIAL A | BLENDING AMOUNT ($v_2$) OF RAW MATERIAL B | $\cdots$ | DESIGN PARAMETER ($v_p$) |
| $x_1$ | $\cdots$ | $\cdots$ | $\cdots$ | $\cdots$ |
| $x_2$ | $\cdots$ | $\cdots$ | $\cdots$ | $\cdots$ |
| $x_3$ | $\cdots$ | $\cdots$ | $\cdots$ | $\cdots$ |
| $\vdots$ | $\cdots$ | $\cdots$ | $\cdots$ | $\cdots$ |
| $x_T$ | $\cdots$ | $\cdots$ | $\cdots$ | $\cdots$ |

## Fig.5

EP 4 535 216 A1

| OBSERVATION VALUE GROUP IN t-TH MATERIAL PRODUCTION (t = 1 TO T) | OBSERVATION VALUE $y_{m,t}$ OF CHARACTERISTIC ITEM m (m = 1 TO M) | | | |
|---|---|---|---|---|
| | GLASS TRANSITION TEMPERATURE (m=1) | ADHESIVE FORCE (m=2) | $\cdots$ | CHARACTERISTIC ITEM M (m=M) |
| 1 | $y_{1,1}$ | $y_{2,1}$ | $\cdots$ | $y_{M,1}$ |
| 2 | $y_{1,2}$ | $y_{2,2}$ | $\cdots$ | $y_{M,2}$ |
| 3 | $y_{1,3}$ | $y_{2,3}$ | $\cdots$ | $y_{M,3}$ |
| $\vdots$ | $\vdots$ | $\vdots$ | $\vdots$ | $\vdots$ |
| T | $y_{1,T}$ | $y_{2,T}$ | $\cdots$ | $y_{M,T}$ |

*Fig.6*

| TARGET VALUE $y_{m(target)}$ (m=1 TO M) FOR OBSERVATION VALUE OF CHARACTERISTIC ITEM (1 TO M) | | | |
|---|---|---|---|
| GLASS TRANSITION TEMPERATURE (m=1) | ADHESIVE FORCE (m=2) | . . . | CHARACTERISTIC ITEM M (m=M) |
| $y_{1(target)}$ | $y_{2(target)}$ | . . . | $y_{M(target)}$ |

# Fig.7

gt

gt1    gt2    gt3    gtm    G

TARGET
ACHIEVEMENT
PROBABILITY

20%    — ga

. . .

Caluculate    — gb

TARGET    TARGET    TARGET    TARGET
VALUE 1   VALUE 2   VALUE 3   VALUE M

$y_{1(target)}$    $y_{2(target)}$    $y_{3(target)}$    $y_{M(target)}$

# Fig.8

| OPTIMIZATION RANGE OF DESIGN PARAMETER $v_p$ (p=1 to P) | | | | |
|---|---|---|---|---|
| DESIGN PARAMETER($v_1$) | DESIGN PARAMETER($v_2$) | DESIGN PARAMETER($v_3$) | $\cdots$ | DESIGN PARAMETER($v_p$) |
| 0−10 | 5 | 0−20,30−49 | $\cdots$ | 2or3 |

# Fig.9

```
                    ┌─────────┐
                    │  START  │
                    └────┬────┘
                         │
   ┌─────────────────────┴─────────────────────┐
   │ ACQUIRE PERFORMANCE DATA INCLUDING         │
   │ PAIR OF DESIGN PARAMETER GROUP AND         │─── S1
   │ OBSERVATION VALUE OF EACH                  │
   │ CHARACTERISTIC ITEM                        │
   └─────────────────────┬─────────────────────┘
                         │
   ┌─────────────────────┴─────────────────────┐
   │ CONSTRUCT PREDICTION MODEL BASED ON        │─── S2
   │ PERFORMANCE DATA                           │
   └─────────────────────┬─────────────────────┘
                         │
   ┌─────────────────────┴─────────────────────┐
   │ ACQUIRE TARGET VALUE OF                    │─── S3
   │ CHARACTERISTIC ITEM                        │
   └─────────────────────┬─────────────────────┘
                         │
   ┌─────────────────────┴─────────────────────┐
   │ CONSTRUCT SCORE FUNCTION                   │─── S4
   └─────────────────────┬─────────────────────┘
                         │
   ┌─────────────────────┴─────────────────────┐
   │ OPTIMIZE SCORE FUNCTION                    │─── S5
   └─────────────────────┬─────────────────────┘
                         │
   ┌─────────────────────┴─────────────────────┐
   │ ACQUIRE OVERALL ACHIEVEMENT                │─── S6
   │ PROBABILITY                                │
   └─────────────────────┬─────────────────────┘
                         │
   ┌─────────────────────┴─────────────────────┐
   │ OUTPUT(DISPLAY)OVERALL ACHIEVEMENT         │─── S7
   │ PROBABILITY                                │
   └─────────────────────┬─────────────────────┘
                         │
                    ┌────┴────┐
                    │   END   │
                    └─────────┘
```

# Fig.10

TARGET VALUE $y_{a(target)}$ OF
CHARACTERISTIC ITEM a

# Fig.11

RECORDING MEDIUM — M1

DESIGN ASSISTANCE PROGRAM — P1

MAIN MODULE — m10

DATA ACQUISITION MODULE — m11

MODEL CONSTRUCTION MODULE — m12

TARGET VALUE ACQUISITION MODULE — m13

OPTIMIZATION RANGE ACQUISITION MODULE — m14

SCORE FUNCTION CONSTRUCTION MODULE — m15

TARGET ACHIEVEMENT PROBABILITY ACQUISITION MODULE — m16

OUTPUT MODULE — m17

<div align="center">**INTERNATIONAL SEARCH REPORT**</div>

| International application No. |
| --- |
| **PCT/JP2023/027807** |

### A. CLASSIFICATION OF SUBJECT MATTER

*G06F 30/20*(2020.01)i
FI:  G06F30/20

According to International Patent Classification (IPC) or to both national classification and IPC

### B. FIELDS SEARCHED

Minimum documentation searched (classification system followed by classification symbols)

G06F30/00-30/398; G06Q50/04-50/08

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| A | WO 2022/124077 A1 (SHOWA DENKO MATERIALS CO., LTD.) 16 June 2022 (2022-06-16)<br>   claims | 1-11 |
| A | WO 2022/124075 A1 (SHOWA DENKO MATERIALS CO., LTD.) 16 June 2022 (2022-06-16)<br>   claims | 1-11 |
| A | WO 2019/043926 A1 (MITSUBISHI ELECTRIC CORP.) 07 March 2019 (2019-03-07)<br>   claims | 1-11 |
| A | JP 2007-087302 A (MAZDA MOTOR CORP.) 05 April 2007 (2007-04-05)<br>   paragraphs [0088]-[0115] | 1-11 |

☐ Further documents are listed in the continuation of Box C.    ☑ See patent family annex.

| | |
| --- | --- |
| \* Special categories of cited documents:<br>"A"  document defining the general state of the art which is not considered to be of particular relevance<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search | Date of mailing of the international search report |
| --- | --- |
| **03 October 2023** | **10 October 2023** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2023/027807**

| Patent document cited in search report | | | Publication date (day/month/year) | Patent family member(s) | Publication date (day/month/year) |
|---|---|---|---|---|---|
| WO | 2022/124077 | A1 | 16 June 2022 | (Family: none) | |
| WO | 2022/124075 | A1 | 16 June 2022 | (Family: none) | |
| WO | 2019/043926 | A1 | 07 March 2019 | (Family: none) | |
| JP | 2007-087302 | A | 05 April 2007 | US 2007/0073526 A1 paragraphs [0241]-[0269] EP 1770618 A1 | |

Form PCT/ISA/210 (patent family annex) (January 2015)

**REFERENCES CITED IN THE DESCRIPTION**

**Patent documents cited in the description**

- JP 2020052737 A